# EUROPEAN PATENT APPLICATION

(11) **EP 4 567 610 A1**
(43) Date of publication of application: **11.06.2025**
(21) Application number: 24216824.3
(22) Date of filing: 02.12.2024
(51) Int. Cl.: G06F 13/16, G06F 3/06

(54) **SYSTEMS, METHODS, AND APPARATUS FOR CONFIGURABLE MEMORY MANAGEMENT**

(30) Priority: 05.12.2023 US 202363606591 P; 15.11.2024 US 202418949984
(71) Applicant: Samsung Electronics Co., Ltd., Suwon-si, Gyeonggi-do 16677 (KR)
(72) Inventor: CHOI, Byung, San Jose, CA, 95134 (US); AMMARI, Ramzi, San Jose, CA, 95134 (US); GARG, Mukesh, San Jose, CA, 95134 (US); CHOI, Changho, San Jose, CA, 95134 (US)
(74) Representative: Kuhnen & Wacker Patent- und Rechtsanwaltsbüro PartG mbB

(57) **Abstract**

A system may include a host, one or more memory devices configured at least in part as system memory; a memory interface; a further memory device connected to the memory interface and at least one circuit configured to perform one or more operations including receiving a request to configure memory for the one or more memory devices; using the memory interface to connect the memory device to the host. Using the memory interface includes enabling the memory interface, where enabling the memory interface allows the memory device to be added to the one or more memory devices, being accessed by the host. In some aspects, using the memory interface and configuring the memory device are performed while the system remains in a powered-on state.

## Description

### TECHNICAL FIELD

This disclosure relates generally to memory management, and more specifically to systems, methods, and apparatus for configurable memory management.

### BACKGROUND

Memory management is typically performed during the start-up of a computing system based on a predefined hardware configuration. For example, prior to the start-up of a computing system, a user may make modifications to the hardware (e.g., the memory) and set a hardware configuration, where the system will run with the set hardware configuration. If the user wants a different hardware configuration, e.g., if more memory is needed, the user may shut down the system, update the hardware and/or configuration, and restart the system to accommodate the change.

The above information disclosed in this Background section is only for enhancement of understanding of the background of the inventive principles and therefore it may contain information that does not constitute prior art.

### SUMMARY

In some aspects, the techniques described herein relate to a system including one or more memory devices configured at least in part as system memory; a memory interface; and at least one circuit configured to perform one or more operations including receiving a request to configure memory for the one or more memory devices; using the memory interface to connect a memory device to the one or more memory devices; and configuring the memory device to operate as system memory. In some aspects, using the memory interface includes enabling the memory interface, where enabling the memory interface allows the memory device to be added to the one or more memory devices. In some aspects, the at least one circuit is further configured to perform one or more operations including determining that the memory interface is available to configure the memory for the one or more memory devices. In some aspects, the memory interface is a first interface; the request is a first request; and the at least one circuit is further configured to perform one or more operations including receiving a second request to configure memory for the one or more memory devices; and configuring a second interface to modify an available state of one of the one or more memory devices. In some aspects, using the memory interface includes determining a bandwidth corresponding to the request; and enabling the memory interface based on the bandwidth. In some aspects, the memory interface includes one or more lanes; and the at least one circuit is further configured to perform one or more operations including configuring the one or more lanes based on the request. In some aspects, receiving the request to configure memory includes receiving a request to modify an amount of memory bandwidth; and using the memory interface includes using the memory interface based on the amount of memory bandwidth. In some aspects, using the memory interface and configuring the memory device are performed while the system remains in a powered-on state.

In some aspects, the techniques described herein relate to a method including receiving a request to configure memory; determining that resources are available for the request to configure memory; configuring the memory based on the request; and modifying an activated state for one or more memory interfaces. In some aspects, receiving a request to configure memory includes receiving a request for an amount of memory to be modified; and configuring the memory includes modifying the activated state of the one or more memory interfaces based on the amount of memory to be modified. In some aspects, determining that resources are available includes determining that the one or more memory interfaces are available to connect one or more memory devices configured to operate at least in part as system memory. In some aspects, determining that resources are available includes determining a bandwidth corresponding to the request and determining that the one or more memory interfaces correspond to the bandwidth; and configuring the memory includes modifying the activated state for the one or more memory interfaces based on the bandwidth. In some aspects, configuring the memory includes enabling one or more lanes of a memory interface based on the request. In some aspects, configuring the memory is performed while a system configured with the memory remains in a powered-on state.

In some aspects, the techniques described herein relate to a device including a memory interface; and at least one circuit configured to perform one or more operations including receiving a request to configure memory for one or more memory devices configured at least in part as system memory; using a memory interface to connect a memory device to the one or more memory devices; and configuring the memory device to operate as system memory. In some aspects, using the memory interface includes enabling the memory interface, where enabling the memory interface allows the memory device to connect to the one or more memory devices. In some aspects, using the memory interface includes modifying an available status of the memory device in the one or more memory devices. In some aspects, receiving the request to configure memory includes receiving a request to increase an amount of memory bandwidth; and at least one circuit is further configured to perform one or more operations including enabling one or more memory interfaces corresponding to the request to increase the amount of memory bandwidth. In some aspects, the memory interface includes one or more lanes; and the at least one circuit is further configured to perform one or more operations including configuring the one or more lanes based on the request. In some aspects, using the memory interface and configuring the memory device are performed while the device remains in a powered-on state.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
FIG. 1 illustrates an embodiment of a memory device scheme in accordance with example embodiments of the disclosure.
FIG. 2 illustrates another embodiment of a memory device scheme in accordance with example embodiments of the disclosure.
FIG. 3 illustrates another embodiment of a memory device scheme in accordance with example embodiments of the disclosure.
FIG. 4a illustrates an example of an auxiliary processing unit (xPU) configured with system memory in accordance with example embodiments of the disclosure.
FIG. 4b illustrates an example of an xPU configured with expanded memory in accordance example embodiments of the example.
FIG. 5 illustrates an embodiment of an xPU with configurable memory in accordance with example embodiments of the disclosure.
FIG. 6 illustrates another embodiment of an xPU with configurable memory in accordance with example embodiments of the disclosure.
FIG. 7 illustrates another embodiment of an xPU with configurable memory in accordance with example embodiments of the disclosure.
FIG. 8 illustrates an example flowchart of reconfiguring memory in accordance with example embodiments of the disclosure.

### DETAILED DESCRIPTION

Generally, a computing system may have an existing hardware configuration. For example, the system may be set up with certain hardware resources (e.g., computing processing unit (CPU) and graphic processing unit (GPU) cores, memory, storage, etc.). If more resources are needed, the hardware may be reconfigured (e.g., by adding additional memory) to accommodate the new requirements.

The capabilities of memory devices have increased over time. For example, in some embodiments, memory devices may be configured as additional or expanded memory for a computing system. However, although new capabilities may be introduced, in some embodiments, the hardware may rely on existing ways for its configuration. For example, if a memory device is added to a system, in some embodiments, it may need to be configured prior to start-up of the system. In some embodiments, if the hardware configuration is to be changed, the system may be shut down, resulting in the system being unavailable for a duration as the configuration is modified and the system is restarted (e.g., rebooted).

According to embodiments of the disclosure, a configurable memory management module may be added that allows a user to dynamically configure memory for a system. For example, a configurable memory management module may allow memory to be enabled/disabled, and the size of the memory pool changed without the system being restarted. For example, one or more interfaces to the memory devices may be activated/deactivated enabling a memory device to be added/removed from the memory pool.

In some embodiments, the memory management module may be implemented on hardware and/or software. In some embodiments, the memory management module may be implemented on one or more circuits of a memory device. In some embodiments, the one or more circuits may include one or more field programmable gate arrays (FPGAs), application specific integrated circuits (ASICs), and/or systems-on-a-chip (SoCs).

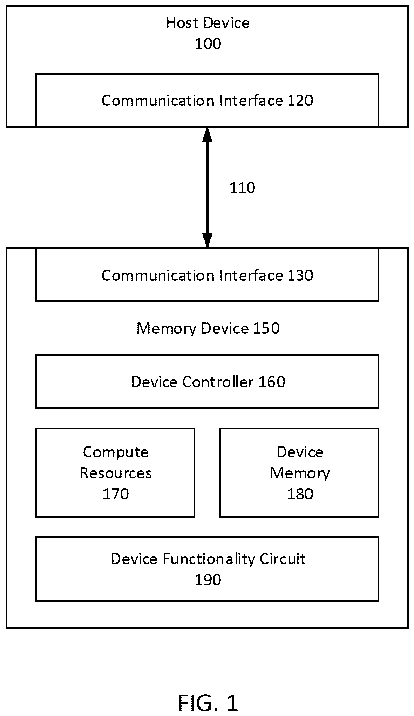

FIG. 1 illustrates an embodiment of a memory device scheme in accordance with example embodiments of the disclosure. The embodiment illustrated in FIG. 1 may include one or more host devices 100 and one or more memory devices 150 configured to communicate using one or more communication connections 110.

In some embodiments, a host device 100 may be implemented with any component or combination of components that may utilize one or more features of a memory device 150. For example, a host may be implemented with one or more of a server, a storage node, a compute node, a central processing unit (CPU), a workstation, a personal computer, a tablet computer, a smartphone, and/or the like, or multiples and/or combinations thereof.

In some embodiments, a memory device 150 may include a communication interface 130, memory 180 (some or all of which may be referred to as device memory), one or more compute resources 170 (which may also be referred to as computational resources), a device controller 160, and/or a device functionality circuit 190. In some embodiments, the device controller 160 may control the overall operation of the memory device 150 including any of the operations, features, and/or the like, described herein. For example, in some embodiments, the device controller 160 may parse, process, invoke, and/or the like, commands received from the host devices 100.

In some embodiments, the device functionality circuit 190 may include any hardware to implement the primary function of the memory device 150. For example, the device functionality circuit 190 may include storage media such as magnetic media (e.g., if the memory device 150 is implemented as a hard disk drive (HDD) or a tape drive), solid state media (e.g., one or more flash memory devices), optical media, and/or the like. For instance, in some embodiments, a memory device may be implemented at least partially as a solid-state drive (SSD) based on not-AND (NAND) flash memory, persistent memory (PMEM) such as cross-gridded nonvolatile memory, memory with bulk resistance change, phase change memory (PCM), or any combination thereof. In some embodiments, the device controller 160 may include a media translation layer such as a flash translation layer (FTL) for interfacing with one or more flash memory devices. In some embodiments, the memory device 150 may be implemented as a computational storage drive, a computational storage processor (CSP), and/or a computational storage array (CSA).

As another example, if the memory device 150 is implemented as an accelerator, the device functionality circuit 190 may include one or more accelerator circuits, memory circuits, and/or the like.

The compute resources 170 may be implemented with any component or combination of components that may perform operations on data that may be received, stored, and/or generated at the memory device 150. Examples of compute engines may include combinational logic, sequential logic, timers, counters, registers, state machines, complex programmable logic devices (CPLDs), FPGAs, ASICs, embedded processors, microcontrollers, central processing units (CPUs) such as complex instruction set computer (CISC) processors (e.g., x86 processors) and/or a reduced instruction set computer (RISC) processors such as ARM processors, graphics processing units (GPUs), data processing units (DPUs), neural processing units (NPUs), tensor processing units (TPUs), and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

In some embodiments, the memory 180 may be used, for example, by one or more of the compute resources 170 to store input data, output data (e.g., computation results), intermediate data, transitional data, and/or the like. The memory 180 may be implemented, for example, with volatile memory such as dynamic random-access memory (DRAM), static random-access memory (SRAM), and/or the like, as well as any other type of memory such as nonvolatile memory.

In some embodiments, the memory 180 and/or compute resources 170 may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, and/or the like. Software, instructions, programs, code, and/or the like, may be stored, for example, in a repository in memory 180 and/or compute resources 170. In some embodiments, software, instructions, programs, code, and/or the like, may be downloaded, uploaded, sideloaded, pre-installed, built-in, and/or the like, to the memory 180 and/or compute resources 170. In some embodiments, the memory device 150 may receive one or more instructions, commands, and/or the like, to select, enable, activate, execute, and/or the like, software, instructions, programs, code, and/or the like. Examples of computational operations, functions, and/or the like, that may be implemented by the memory 180, compute resources 170, software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence (AI), machine learning (ML), neural networks, and/or the like.

In some embodiments, a communication interface 120 at a host device 100, a communication interface 130 at a memory device 150, and/or a communication connection 110 may implement, and/or be implemented with, one or more interconnects, one or more networks, a network of networks (e.g., the internet), and/or the like, or a combination thereof, using any type of interface, protocol, and/or the like. For example, the communication connection 110, and/or one or more of the interfaces 120 and/or 130 may implement, and/or be implemented with, any type of wired and/or wireless communication medium, interface, network, interconnect, protocol, and/or the like including Peripheral Component Interconnect Express (PCIe), NVMe, NVMe over Fabric (NVMe-oF), Compute Express Link (CXL), and/or a coherent protocol such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection 110 may include one or more switches, hubs, nodes, routers, and/or the like.

In some embodiments, a memory device 150 may be implemented in any physical form factor. Examples of form factors may include a 3.5 inch, 2.5 inch, 1.8 inch, and/or the like, memory device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the computational devices disclosed herein may be connected to a system using one or more connectors such as SATA connectors, SCSI connectors, SAS connectors, M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), and/or the like.

Any of the memory devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a memory device 150 may be implemented with any device that may include, or have access to, memory, storage media, and/or the like, to store data that may be processed by one or more compute resources 170. Examples may include memory expansion and/or buffer devices such as CXL type 2 and/or CXL type 3 devices, as well as CXL type 1 devices that may include memory, storage media, and/or the like.

In some embodiments, one or more memory devices 150 may form a storage pool. Generally, a storage pool is a logical grouping of memory devices that a system may have access to. In some embodiments, when the one or more memory devices 150 are used as expanded memory and/or system memory, the one or more memory devices 150 may also form a memory pool. In some embodiments, a storage pool and/or memory pool may be accessed as a pool and/or as individual memory devices.

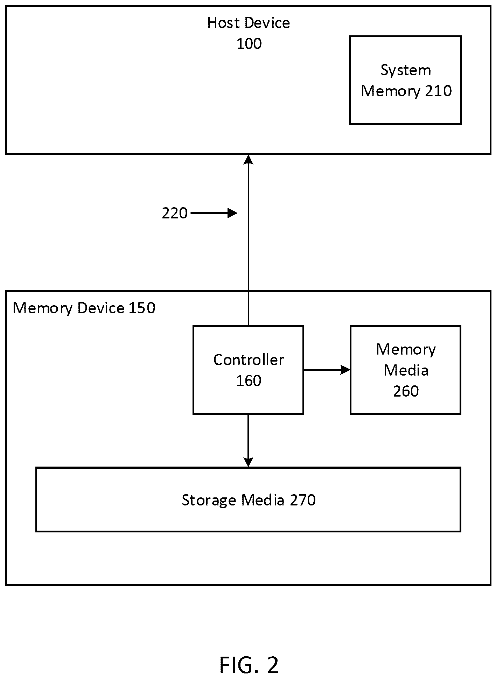

FIG. 2 illustrates another embodiment of a memory device scheme in accordance with example embodiments of the disclosure. The elements illustrated in FIG. 2 may be similar elements to those illustrated in FIG. 1 in which similar elements may be indicated by reference numbers ending in, and/or containing, the same digits, letters, and/or the like. In some embodiments, the host device 100 may include system memory 210; and the memory device 150 may include a controller 160, memory media 260 and/or storage media 270. In some embodiments, the controller 160 may be implemented on one or more circuits of the memory device 150. In some embodiments, the one or more circuits may include one or more FPGAs, ASICs, and/or SoCs.

In some embodiments, the memory media 260 may be relatively fast memory such as DRAM and the storage media 270 may be slower non-volatile memory, such as NAND flash memory. In some embodiments, the memory media 260 may be used as a cache to store frequently accessed data in the faster memory. In some embodiments, the host device 100 may use a memory access request 220 to retrieve data from the memory media 260. In particular, in some embodiments, in response to receiving a memory access request 220, the memory device 150 may send a request to the controller 160 to check the memory media 260 for data corresponding to the request. In some embodiments, in response to a cache hit (e.g., the data is found on the memory media 260), the data may be returned from the memory media 260. In some embodiments, in response to a cache miss (e.g., the data is not found on the memory media 260), the controller 160 may copy the data from the storage media 270 to the memory media 260 and return the data from the memory media 260.

In some embodiments, the memory device 150 may be advertised as system memory (e.g., device memory). In other words, the memory device 150 may appear to the host device 100 as an additional memory node and may be managed by the OS non-uniform memory architecture (NUMA) memory management. In some embodiments, when the memory device 150 is configured as expanded memory, the host device 100 may write data to local device memory on the host device 100 or on the memory device 150. In some embodiments, since the memory device 150 may use memory media 260, with its fast speed, the host device 100 may not experience a lot of latency when accessing the memory media 260 as compared to accessing local device memory. In some embodiments, this may offer the host device 100 additional memory capacity at a lower cost than adding additional device memory to the host device 100.

In some embodiments, the demand for large memory capacity and/or bandwidth may increase due to large Artificial Intelligence (AI) models and wide adoption of data analytics and in-memory databases. Memory devices, such as the memory device 150, may be used an alternative to system memory 210 to expand memory capacity since memory devices are generally more affordable than system memory. However, in some embodiments, memory bandwidth and/or capacity expansion capability with configurable hardware may not be present. For example, memory management is typically performed with static physical memory capacity, which is determined during booting based on predefined static hardware configurations (e.g., double data rate (DDR), high-bandwidth memory (HBM), etc.).

In some embodiments, the maximum transfer speed between the host device 100 and memory configured as expanded memory on the memory device 150 may be determined by the number of ports and/or lanes allocated to the expanded memory. For example, if a port has 16 lanes with a transfer speed of 4 GB/s per lane, then a port could support transfer speeds of 64 GB/s. In some embodiments, the hardware configuration may allocate a certain number of ports and/or lanes to be used as expanded memory. Thus, for example, if two ports with 16 lanes are allocated to be used as expanded memory, then the memory device 150 may support 128 GB/s. However, in some embodiments, if more bandwidth is needed, the ports may be configured so that more ports and/or lanes may be allocated for use as expanded memory.

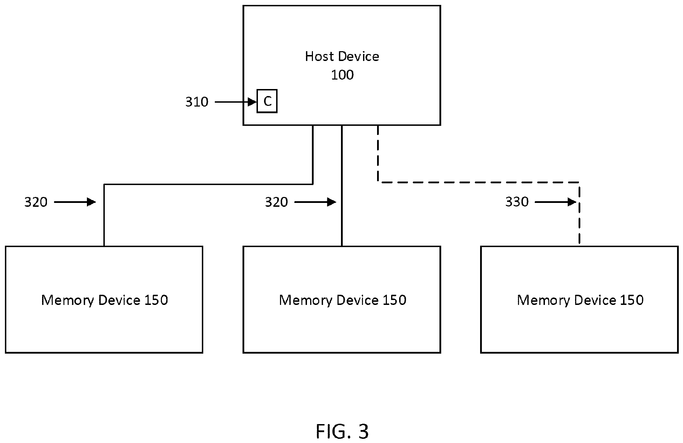

FIG. 3 illustrates another embodiment of a memory device scheme in accordance with example embodiments of the disclosure. The elements illustrated in FIG. 3 may be similar elements to those illustrated in FIGs. 1 and 2 in which similar elements may be indicated by reference numbers ending in, and/or containing, the same digits, letters, and/or the like. In some embodiments, the host device 100 may include one or more core 310; and one or more memory devices 150 may be configured to connect to the host devices using one or more interface (not pictured). A single core 310 is shown in FIG. 3. However, it should be understood that a single core 310 is shown for illustrative purposes, and a host may have multiple cores, as will be described in further detail below.

In some embodiments, a host device 100 may be physically connected to one or more memory devices 150. However, in some embodiments, not all of the interfaces may be activated (e.g., power is not supplied to the interface). Thus, one or more interfaces may be in an activated state 320 and one or more interfaces may be in a deactivated state 330. As will be described in further detail below, a configurable memory management module may allow an interface to be set in an activated/deactivated state without shutting down the system and/or allow enabled/disabled memory devices to be added/removed from the memory pool. In some embodiments, a memory device may remain connected to the system, but since interface in a deactivated state, which may allow the memory device to be unavailable to the system (e.g., change the available status of the memory device).

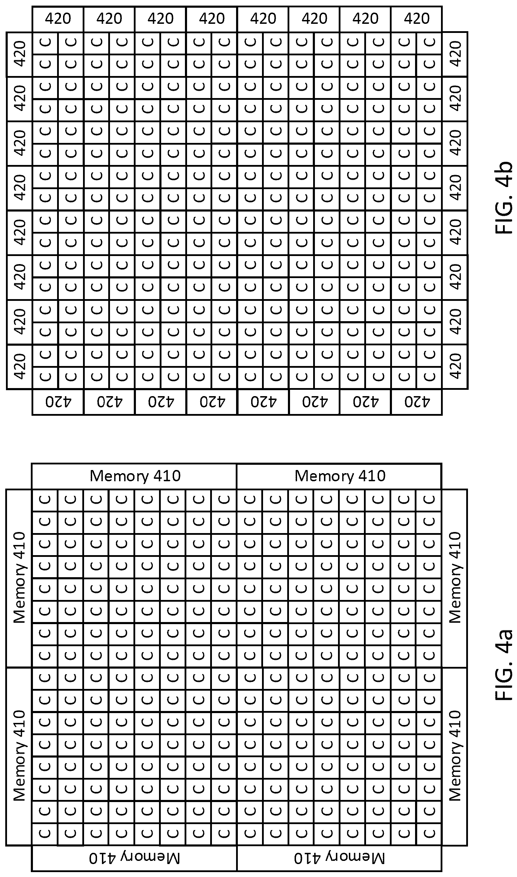

FIGs. 4a and 4b illustrate examples of an xPU (e.g., CPU, GPU, FPGA, SoC, neural processing unit (NPU), vision processing unit (VPU), ASIC, etc.) with corresponding memory in accordance with example embodiments of the disclosure. In FIG. 4a, an xPU (e.g., central processing unit (CPU) or graphic processing unit (GPU)) may be configured with one or more memory interfaces 410, that may communicate with one or more memory, such as the system memory 210 in FIG. 2. Thus, in some embodiments, an xPU may be configured with a fixed amount of memory using the one or more memory interfaces 410. In some embodiments, the number of memory interfaces may be fixed (e.g., all of the one or more memory interfaces 410 may be powered). In some embodiments, a memory controller (not pictured) may be located on the host to control the system memory.

In FIG. 4b, the xPU may be configured with one or more interfaces 420, that are in communication with memory, such as a memory device. In FIG. 4b, some of the one or more interfaces 420 may not be powered. For example, some of the interfaces may be available but not in use, and therefore, not powered. Thus, in some embodiments, each memory interface may be powered or not powered. In both FIGs. 4a and 4b, the system may be configured so that a process may be allocated a number of cores and an amount of memory. In some embodiments, if hardware changes are needed, the system may be powered down so that a configuration may be updated. For example, if the process is related to a virtual machine (VM), which may be allocated a number of GPU and CPU cores, memory and/or storage, when the hardware requirements are changed, the virtual machine may be shut down, the configuration updated, and the virtual machine restarted to accommodate the new configuration. In some embodiments, a controller may be on the memory device 150, such as the controller 160 in FIG. 2. In some embodiments, when the controller 160 is on the memory device 150, a controller may not be needed on the host.

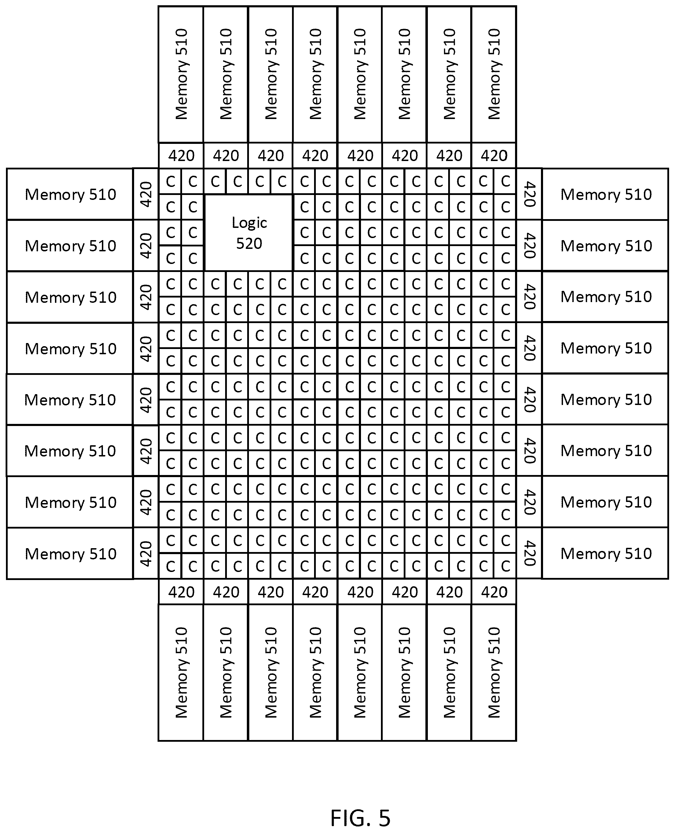

FIG. 5 illustrates an example of an xPU with configurable memory in accordance with example embodiments of the disclosure. The elements illustrated in FIG. 5 may be similar elements to those illustrated in FIG. 4b in which similar elements may be indicated by reference numbers ending in, and/or containing, the same digits, letters, and/or the like. FIG. 5 includes logic 520. In some embodiments, the logic 520 may be a circuit that enables memory to be configurable, e.g., by enabling or disabling ports. For example, if a VM has a hardware configuration (e.g., CPU cores and memory), the logic 520 may be used to change the amount of memory available to the VM by enabling or disabling ports. FIG. 5 illustrates each interface 420 in communication with a memory 510. However, an interface 420 need not be in a one-to-one relationship with a memory 510, and may be in a one-to-many, many-to-many and/or many-to-one relationship.

In some embodiments, the logic 520 may be included in the xPU design. In some embodiments, the logic 520 may be implemented as hardware and/or software. In some embodiments, dynamic memory adjustment using configurable hardware capability may be provided in addition to existing software-driven static memory management.

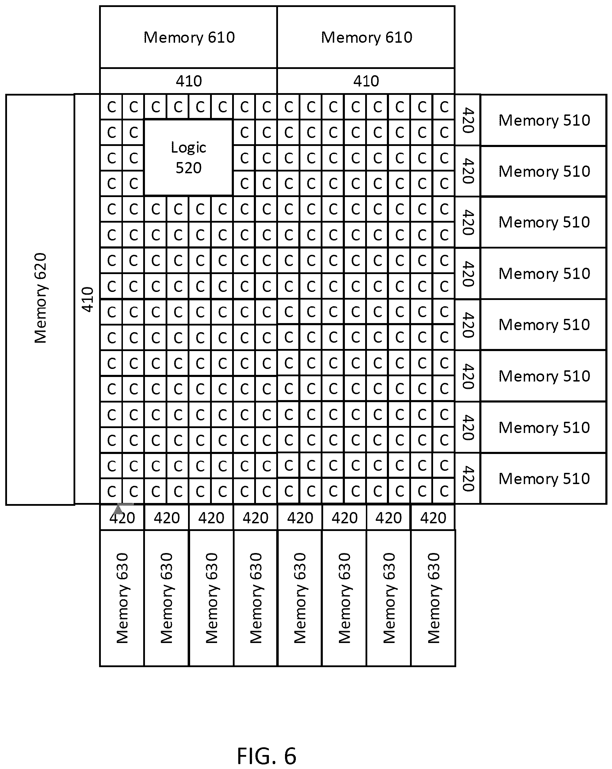

FIG. 6 illustrates another example of an xPU with configurable memory in accordance with example embodiments of the disclosure. The elements illustrated in FIG. 6 may be similar elements to those illustrated in FIG. 5 in which similar elements may be indicated by reference numbers ending in, and/or containing, the same digits, letters, and/or the like. FIG. 6 may allow for dynamic configuration of different types of memory. For example, memory 610 may correspond to DRAM, memory 620 may correspond to HBM, and memory 630 may correspond to a memory device configured as storage. Thus, in some embodiments, the logic 520 may be used to configure different memory types and interfaces, allowing a system to set memory bandwidth and/or capacity dynamically.

As used herein, an "interface" may refer to the mechanism that allow data to be transferred between devices. For example, an interface may use a physical layer to transport protocols between devices. In some embodiments, an interface may be hardware and/or software. As used herein, a "port" may refer to a connection between devices that allow the device to connect to one another. In some embodiments, a port may have multiple lanes (e.g., 16 lanes) that provide a data path between devices. It should be understood that the terms "interface" and "port" may be used interchangeably as both refer to the mechanism that allows devices to be in communication with each other.

In some embodiments, an algorithm for dynamic port management logic may be provided. For example, in some embodiments, an application and/or operating system (OS) may communicate a memory requirement (e.g., higher or lower). In some embodiments, the system may check for available ports. In some embodiments, the system may configure the memory by enabling/disabling memory ports.

In some embodiment, a low power state (e.g., L0p) may be used to further configure memory bandwidth. For example, individual lanes in a port may be enabled/disabled to allow for finer granularity of memory configuration. In some embodiments, the system may make changes to the configuration without disturbing live traffic.

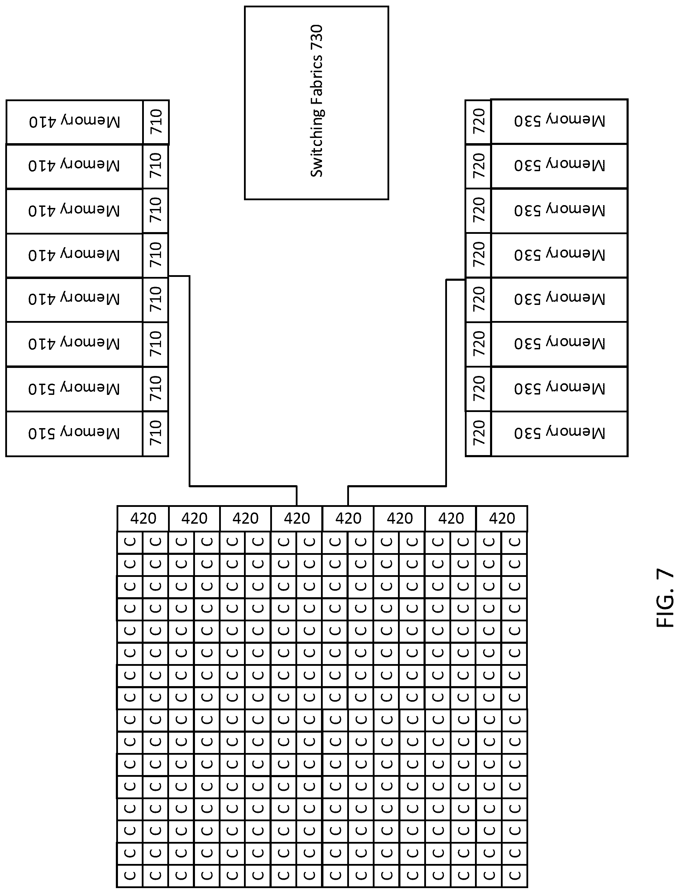

FIG. 7 illustrates another example of an xPU with configurable memory in accordance with example embodiments of the disclosure. The elements illustrated in FIG. 7 may be similar elements to those illustrated in FIGs. 5 and 6 in which similar elements may be indicated by reference numbers ending in, and/or containing, the same digits, letters, and/or the like. FIG. 7 includes interfaces 710 and 720 and switching fabrics 730. The interfaces 710 and 720 may communicate with corresponding interfaces 420. In some embodiments, the switching fabrics 730 may enable the interconnection of the interfaces 420 and interfaces 710 and 720.

In some embodiments, the switching fabrics 730 may be an architecture that allows switches to connect to other switches, and nodes to connect to other nodes. In some embodiments, the switching fabrics 730 may be enabled on hardware and/or software. In some embodiments, the switching fabrics 730 may enable data to be passed between the interfaces 420 on the host and the interfaces 710 and 720 on the memory 510 and 530. In particular, the switching fabrics 730 may enable switching between the host and memory 510 and 530 so that a one-to-one relationship need not be maintained between the interfaces 420 and interfaces 710 and 720 since the connection between the devices may be maintained by the switching fabrics 730.

In FIG. 7, memory 510 and memory 530 are shown. It should be understood that memory 510 and 530 need not be different memory and may be the same type of memory. In some embodiments, memory 510 may correspond to a type of memory device and memory 530 may correspond to a different type of memory device. Further, memory 510 may correspond to memory used for a purpose (e.g., as expanded memory) and memory 530 may correspond to memory used for a different purpose. It is within the scope of the disclosure that memory 510 and 530 may be any type of memory device that is in communication with a host.

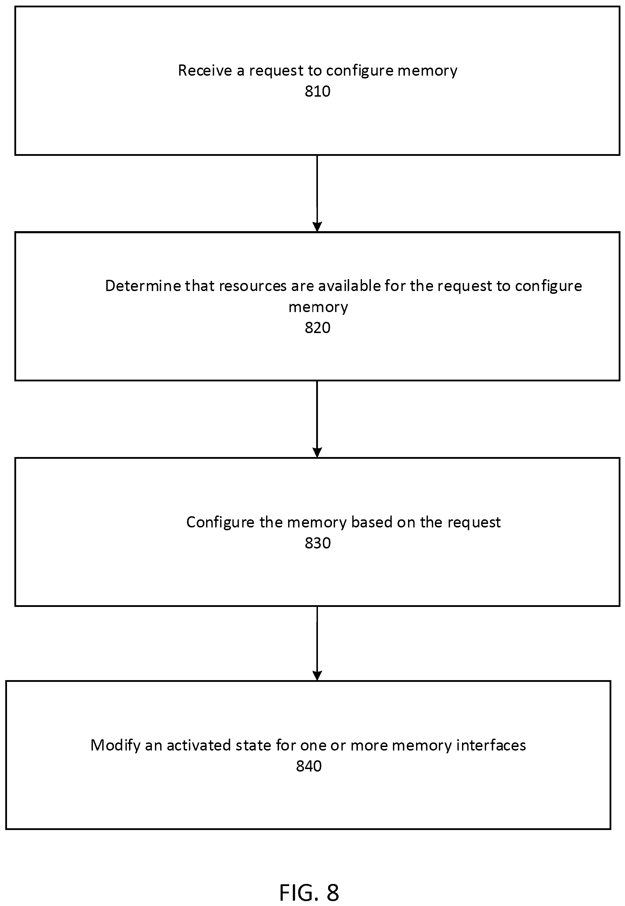

FIG. 8 illustrates an example flowchart of reconfiguring memory in accordance with example embodiments of the disclosure. For example, at block 810, according to embodiments, a device may receive a request to configure memory. In some embodiments, the device may receive a request from an application or OS to increase or decrease the amount of memory. For example, for AI-related operations, additional memory may be required to perform some operations. However, the system may be limited by the amount of system memory and attached memory devices. In some embodiments, additional memory devices may be added and/or interfaces may be enabled or disabled to provide the requested memory without shutting down the system to enable the configuration changes. Further, since a pool of memory may be limited by the total amount of system memory and storage devices, when an application and/or OS no longer needs the memory, the configuration may be changed to decrease the allocated memory freeing it for other operations.

At block 820, according to embodiments, the device may determine that resources are available for the request to configure memory. For example, the device may check for available ports. In some embodiments, some ports may be available, but the corresponding interface may not be enabled. In some embodiments, a host may have one or more interfaces enabled allowing it to communicate with the memory devices in communication with the interfaces, and one or more interfaces disabled preventing it from communicating with memory devices. In some embodiments, the device may determine whether the port is available and/or is used by another process.

At block 830, according to embodiments, the memory may be configured based on the request. In some embodiments, based on the memory in the memory pool, the device may determine whether an interface may be activated or deactivated based on the required memory. For example, based on the request and the memory available in the memory pool, the device may determine a number of interfaces to activate and/or deactivate. If the bandwidth needs to be modified, the number of interfaces to activate and/or deactivate may be changed based on the bandwidth.

At block 840, according to embodiments, the activated state for one or more memory interfaces may be modified. For example, in some embodiments, one or more interfaces may be enabled or disabled. Further, lanes for an interface may be enabled or disabled. This may allow the application or OS to request more or less memory dynamically without needing the system to be halted. For example, the amount of memory available and the amount of memory requested may be calculated. In some embodiments, one or more circuits, such as a management configuration module, may be used to determine whether to increase or decrease the available memory and the amount of memory to be increased or decreased. In some embodiments, one or more memory interfaces may be enabled or disabled based on the amount of memory to be increased or decreased. Furthermore, in some embodiments, if more precise memory control is required, individual lanes may be enabled or disabled to provide the requested amount of memory to be increased or decreased.

Thus, in some embodiments, memory may be dynamically configured minimizing downtime to the system. Further, since memory devices, such as memory device 150 in FIG. 1, are generally cheaper per GB than system memory, the total cost of ownership may be lowered by providing a large memory capacity (e.g., expanded memory) using the memory device.

In some embodiments, cache media may be accessed by software using load and/or store instructions, whereas storage media may be accessed by software using read and/or write instructions.

In some embodiments, cache media may be accessed using a memory interface and/or protocol such as DDR of any generation (e.g., DDR4, DDR5, etc.), DMA, RDMA, Open Memory Interface (OMI), CXL, Gen-Z, and/or the like, whereas storage media may be accessed using a storage interface and/or protocol such as serial ATA (SATA), Small Computer System Interface (SCSI), serial attached SCSI (SAS), NVMe, NVMe-oF, and/or the like.

Although some embodiments may be described in the context of cache media that may be implemented with cache media such as DRAM, in other embodiments, other types of media, e.g., storage media, may be used for cache media. For example, in some embodiments, some or all of the memory media 260 may be implemented with media other than cache media that may have one or more relative characteristics (e.g., relative to the storage media 270) that may make one or both of them more suitable for their respective functions. For instance, in some embodiments, the storage media 270 may have a relatively higher capacity, lower cost, and/or the like, whereas some or all of the memory media 260 may have relatively lower access latency that may make it relatively more suitable for use as a cache.

Memory device 150 as well as any other devices disclosed herein may be used in connection with one or more personal computers, smart phones, tablet computers, servers, server chassis, server racks, datarooms, datacenters, edge datacenters, mobile edge datacenters, and/or any combinations thereof.

Any of the functionality described herein, including any of the user functionality, device functionally, and/or the like (e.g., any of the control logic) may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), FPGAs, ASICs, central processing units (CPUs) including CISC processors such as x86 processors and/or RISC processors such as ARM processors, graphics processing units (GPUs), neural processing units (NPUs), tensor processing units (TPUs), data processing units (DPUs), and/or the like, executing instructions stored in any type of memory. In some embodiments, one or more components may be implemented as a SoC.

Some embodiments disclosed above have been described in the context of various implementation details such as devices implemented as memory devices that may use specific interfaces, protocols, and/or the like, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

In the embodiments described herein, the operations are example operations, and may involve various additional operations not explicitly illustrated. In some embodiments, some of the illustrated operations may be omitted. In some embodiments, one or more of the operations may be performed by components other than those illustrated herein. Additionally, in some embodiments, the temporal order of the operations may be varied. Moreover, the figures are not necessarily drawn to scale.

The principles disclosed herein may have independent utility and may be embodied individually, and not every embodiment may utilize every principle. However, the principles may also be embodied in various combinations, some of which may amplify the benefits of the individual principles in a synergistic manner.

In some embodiments, the latency of a memory device may refer to the delay between a memory device and the processor in accessing memory. Furthermore, latency may include delays caused by hardware such as the read-write speeds to access a memory device, and/or the structure of an arrayed memory device producing individual delays in reaching the individual elements of the array. For example, a first memory device in the form of DRAM may have a faster read/write speed than a second memory device in the form of a NAND device. Furthermore, the latency of a memory device may change over time based on conditions such as the relative network load, as well as performance of the memory device over time, and environmental factors such as changing temperature influencing delays on the signal path.

Although some example embodiments may be described in the context of specific implementation details such as a processing system that may implement a NUMA architecture, memory devices, and/or pools that may be connected to a processing system using an interconnect interface and/or protocol CXL, and/or the like, the principles are not limited to these example details and may be implemented using any other type of system architecture, interfaces, protocols, and/or the like. For example, in some embodiments, one or more memory devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, an interconnect interface may be implemented with one or more memory semantic and/or memory coherent interfaces and/or protocols including one or more CXL protocols such as CXL.mem, CXL.io, and/or CXL.cache, Gen-Z, Coherent Accelerator Processor Interface (CAPI), Cache Coherent Interconnect for Accelerators (CCIX), and/or the like, or any combination thereof. Any of the memory devices may be implemented with one or more of any type of memory device interface including DDR, DDR2, DDR3, DDR4, DDR5, LPDDRX, Open Memory Interface (OMI), NVLink, HBM, HBM2, HBM3, and/or the like.

In some embodiments, any of the memory devices, memory pools, hosts, and/or the like, or components thereof, may be implemented in any physical and/or electrical configuration and/or form factor such as a free-standing apparatus, an add-in card such as a PCIe adapter or expansion card, a plug-in device, for example, that may plug into a connector and/or slot of a server chassis (e.g., a connector on a backplane and/or a midplane of a server or other apparatus), and/or the like. In some embodiments, any of the memory devices, memory pools, hosts, and/or the like, or components thereof, may be implemented in a form factor for a memory device such as 3.5 inch, 2.5 inch, 1.8 inch, M.2, Enterprise and Data Center SSD Form Factor (EDSFF), NF1, and/or the like, using any connector configuration for the interconnect interface such as a SATA connector, SCSI connector, SAS connector, M.2 connector, U.2 connector, U.3 connector, and/or the like. Any of the devices disclosed herein may be implemented entirely or partially with, and/or used in connection with, a server chassis, server rack, dataroom, datacenter, edge datacenter, mobile edge datacenter, and/or any combinations thereof. In some embodiments, any of the memory devices, memory pools, hosts, and/or the like, or components thereof, may be implemented as a CXL Type-1 device, a CXL Type-2 device, a CXL Type-3 device, and/or the like.

In some embodiments, any of the functionality described herein, including, for example, any of the logic to implement tiering, device selection, and/or the like, may be implemented with hardware, software, or a combination thereof including combinational logic, sequential logic, one or more timers, counters, registers, and/or state machines, one or more CPLD, FPGA, ASICs, CPU such as CISC processors such as x86 processors and/or RISC processors such as ARM processors, GPUs, NPUs, TPUs and/or the like, executing instructions stored in any type of memory, or any combination thereof. In some embodiments, one or more components may be implemented as a SoC.

In this disclosure, numerous specific details are set forth in order to provide a thorough understanding of the disclosure, but the disclosed aspects may be practiced without these specific details. In other instances, well-known methods, procedures, components, and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

When an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" may include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

The term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), SoC, an assembly, and so forth. Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, e.g., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable memory device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other memory devices). Additionally, the operations described in this specification may be implemented as operations performed by a data-processing apparatus on data stored on one or more computer-readable memory devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A system comprising:
one or more memory devices configured at least in part as system memory;
a memory interface; and
at least one circuit configured to perform one or more operations comprising:
receiving a request to configure memory for the one or more memory devices;
using the memory interface to connect a memory device to the one or more memory devices; and
configuring the memory device to operate as system memory.

2. The system of claim 1, wherein using the memory interface comprises enabling the memory interface, wherein enabling the memory interface allows the memory device to be added to the one or more memory devices.

3. The system of claim 1 or 2, wherein the at least one circuit is further configured to perform one or more operations comprising determining that the memory interface is available to configure the memory for the one or more memory devices.

4. The system of any one of claims 1 to 3, wherein:
the memory interface is a first interface;
the request is a first request; and
the at least one circuit is further configured to perform one or more operations comprising:
receiving a second request to configure memory for the one or more memory devices; and
configuring a second interface to modify an available state of one of the one or more memory devices.

5. The system of any one of claims 1 to 4,
wherein using the memory interface comprises:
determining a bandwidth corresponding to the request; and
enabling the memory interface based on the bandwidth.

6. The system of any one of claims 1 to 5,
wherein the memory interface comprises one or more lanes; and
the at least one circuit is further configured to perform one or more operations comprising configuring the one or more lanes based on the request.

7. The system of any one of claims 1 to 6, wherein receiving the request to configure memory comprises receiving a request to modify an amount of memory bandwidth; and using the memory interface comprises using the memory interface based on the amount of memory bandwidth.

8. The system of any one of claims 1 to 7, wherein using the memory interface and configuring the memory device are performed while the system remains in a powered-on state.

9. A method comprising:
receiving a request to configure memory;
determining that resources are available for the request to configure memory;
configuring the memory based on the request; and
modifying an activated state for one or more memory interfaces.

10. The method of claim 9, wherein receiving a request to configure memory comprises receiving a request for an amount of memory to be modified; and configuring the memory comprises modifying the activated state of the one or more memory interfaces based on the amount of memory to be modified.

11. The method of claim 9 or 10, wherein determining that resources are available comprises determining that the one or more memory interfaces are available to connect one or more memory devices configured to operate at least in part as system memory.

12. The method of any one of claims 9 to 11, wherein:
determining that resources are available comprises:
determining a bandwidth corresponding to the request; and
determining that the one or more memory interfaces correspond to the bandwidth; and
configuring the memory comprises modifying the activated state for the one or more memory interfaces based on the bandwidth.

13. The method of any one of claims 9 to 12, wherein configuring the memory comprises enabling one or more lanes of a memory interface based on the request.

14. The method of any one of claims 9 to 13, wherein configuring the memory is performed while a system configured with the memory remains in a powered-on state.

## Amended claims

### Amended claims in accordance with Rule 137(2) EPC.

1. A system comprising:
one or more memory devices (150) configured as system memory (210) of a host device (100);
a memory interface (410, 420); and
at least one circuit (160, 520) configured to perform one or more operations comprising:
receiving a request to configure memory for the one or more memory devices (150);
determining that the memory interface (410, 420) is available to configure the memory for the one or more memory devices (150);
using the memory interface (410, 420) to connect a memory device to the one or more memory devices (150); and
configuring the memory device to operate as system memory (210).

2. The system of claim 1, wherein using the memory interface (410, 420) comprises enabling the memory interface (410, 420), wherein enabling the memory interface (410, 420) allows the memory device to be added to the one or more memory devices (150).

3. The system of claim 1 or 2, wherein:
the memory interface (410, 420) is a first interface;
the request is a first request; and
the at least one circuit (160, 520) is further configured to perform one or more operations comprising:
receiving a second request to configure memory for the one or more memory devices (150); and
configuring a second interface to modify an available state of one of the one or more memory devices (150).

4. The system of any one of claims 1 to 3,
wherein using the memory interface (410, 420) comprises:
determining a bandwidth corresponding to the request; and
enabling the memory interface (410, 420) based on the bandwidth.

5. The system of any one of claims 1 to 4,
wherein the memory interface (410, 420) comprises one or more lanes; and
the at least one circuit (160, 520) is further configured to perform one or more operations comprising configuring the one or more lanes based on the request.

6. The system of any one of claims 1 to 5, wherein receiving the request to configure memory comprises receiving a request to modify an amount of memory bandwidth; and using the memory interface (410, 420) comprises using the memory interface (410, 420) based on the amount of memory bandwidth.

7. The system of any one of claims 1 to 6, wherein using the memory interface (410, 420) and configuring the memory device are performed while the system remains in a powered-on state.

8. A method comprising:
receiving (810) a request to configure memory;
determining (820) that resources are available for the request to configure memory by determining that the one or more memory interfaces (410, 420) are available to connect one or more memory devices (150) configured to operate as system memory (210) of a host device (100);
configuring (830) the memory based on the request; and
modifying (840) an activated state (320) for one or more memory interfaces (410, 420).

9. The method of claim 8, wherein receiving a request to configure memory comprises receiving a request for an amount of memory to be modified; and configuring the memory comprises modifying the activated state (320) of the one or more memory interfaces (410, 420) based on the amount of memory to be modified.

10. The method of claim 8 or 9, wherein:
determining that resources are available comprises:
determining a bandwidth corresponding to the request; and
determining that the one or more memory interfaces (410, 420) correspond to the bandwidth; and
configuring the memory comprises modifying the activated state (320) for the one or more memory interfaces (410, 420) based on the bandwidth.

11. The method of any one of claims 8 to 10, wherein configuring the memory comprises enabling one or more lanes of a memory interface (410, 420) based on the request.

12. The method of any one of claims 8 to 11, wherein configuring the memory is performed while a system configured with the memory remains in a powered-on state.
